**Europäisches Patentamt**

**European Patent Office**

**Office européen des brevets**

(19)

(11) Veröffentlichungsnummer: **0 111 292**
**B1**

# EUROPÄISCHE PATENTSCHRIFT

(45) Veröffentlichungstag der Patentschrift:
**04.06.86**

(21) Anmeldenummer: **83112253.6**

(22) Anmeldetag: **06.12.83**

(51) Int. Cl.⁴: **A 47 J 36/06,** A 47 J 45/06

(54) **Deckelknopf mit steuerbarem Dampfauslass.**

(30) Priorität: **09.12.82 DE 8234578 U**

(43) Veröffentlichungstag der Anmeldung:
**20.06.84 Patentblatt 84/25**

(45) Bekanntmachung des Hinweises auf die Patenterteilung:
**04.06.86 Patentblatt 86/23**

(84) Benannte Vertragsstaaten:
**CH DE FR GB IT LI NL**

(56) Entgegenhaltungen:
**DE - A - 1 429 818**
**DE - A - 3 044 085**
**LU - A - 40 759**
**US - A - 3 827 596**
**US - A - 4 285 441**

(73) Patentinhaber: **Heinrich Baumgarten KG Eisen- und Blechwarenfabrik, Postfach 1620, D-5908 Neunkirchen (DE)**

(72) Erfinder: **Baumgarten, Gerd Diethard, Zur Johanneswiese 9A, D-5901 Wilnsdorf-Wilden (DE)**

(74) Vertreter: **Patentanwälte Dipl.-Ing. R. Schlee Dipl.-Ing. A. Missling, Bismarckstrasse 43, D-6300 Giessen (DE)**

**Beschreibung**

Die Erfindung betrifft einen Deckelknopf für Geschirre, bestehend aus einem Griffteil, der mittels eines Befestigungselementes mit einem Sperrorgan verbunden ist, das den Dampfdurchtritt durch den Deckelknopf steuert, und aus einer zwischen Griffteil und dem Geschirr liegenden Rosette.

Ein Deckelknopf der vorstehend genannten Art besitzt eine Entlüftungsöffnung, die je nach der Stellung des Deckelknopfes geschlossen oder aber geöffnet ist. Bei bekannten Deckelknöpfen der eingangs beschriebenen Art strömt der Dampf durch das Befestigungselement, das mit einer zentralen Bohrung versehen ist und gleichzeitig zur Befestigung des Deckelknopfes am Geschirr dient, in den Deckelknopf und von dort aus über seitlich im Knopf liegende Öffnungen nach aussen. Der Dampf tritt somit unmittelbar in das Griffteil ein, so dass dieses nachteiligerweise stark erhitzt wird. Darüberhinaus zerstört der aggressive Wasserdampf den Kunststoff und führt somit zu vorzeitiger Alterung und gegebenenfalls zum Bruch des Deckelknopfes. Des weiteren ist der bekannte Deckelknopf aufwendig in der Konstruktion, da zum Spritzen der Knöpfe mehrteilige Werkzeuge benötigt werden und der Knopf zur Einstellung der Schliess- und Öffnungsstellung drehbar ausgebildet sein muss.

Der Erfindung liegt die Aufgabe zugrunde, einen Deckelknopf der eingangs genannten Art so auszubilden, dass dieser einfach im Aufbau ist, dass ein Standard-Deckelknopf verwendet werden kann, dass das Griffteil nicht vom Wasserdampf durchströmt wird und somit eine Zerstörung des Deckelknopfes durch den Wasserdampf vermieden ist.

Diese Aufgabe wird gemäss dem kennzeichnenden Teil des Anspruches 1 gelöst.

Bei einem erfindungsgemäss ausgebildeten Deckelknopf ist der Griffteil sowie das Sperrorgan mittels des Befestigungselementes, welches vorteilhaft aus einer Schraube besteht, fest am Deckel angebracht. Der Griffteil ruht hierbei auf dem Sperrorgan, das zwischen Geschirr und Griffteil angeordnet ist. Dieses Sperrorgan ist ein vom Griffteil getrenntes Teil, so dass dieses aus einem anderen Material als das Griffteil hergestellt werden kann. Vorteilhaft wird dieses Sperrorgan aus einem thermoplastischen Kunststoff hergestellt, der den Dampfdurchströmungsraum vom Griffteil trennt, der in üblicher Weise aus einem harten Duroplast besteht. Der Griffteil kann somit aus einem handelsüblichen Teil bestehen. In dem Sperrorgan sind seitlich Dampfaustrittsöffnungen angebracht. Den Griff umgreift eine relativ zum Griffteil und zum Sperrorgan drehbare Rosette, die diese Dampfaustrittsöffnungen je nach Stellung verschliesst oder aber freigibt. Hierdurch ist sichergestellt, dass der Dampf parallel zur Deckeloberfläche abgeleitet wird , so dass die Bedienungsperson beim Öffnen oder Schliessen der Dampfaustrittsöffnungen nicht mit dem Dampf in Berührung kommt.

Gemäss einem weiteren Vorschlag der Erfindung besteht das Befestigungselement aus einer handelsüblichen Schraube und einer Flanschhülse, durch die die Schraube greift und auf der der Schraubenkopf aufliegt. Diese Flanschhülse stützt sich ihrerseits mit ihrem Flansch am Deckel ab. Die Flanschhülse weist auf ihrer Aussenseite Kanäle auf, die eine Verbindung des Raumes unterhalb des Deckels mit dem Innenraum des Deckelknopfes gewährleisten. An der Aussenseite ist die Flanschhülse mit mindestens drei auf deren Umfang verteilt angeordneten Stegen versehen, die sich vom Flansch zum anderen Ende der Hülse hin verjüngen. Diese Stege dienen zum Zentrieren der Flanschhülse in der Ausnehmung des Deckels. Der Vorteil dieser Ausführungsform besteht darin, dass hier eine handelsübliche Schraube verwendet werden kann und darüberhinaus eine Zentrierung des Befestigungselementes im Deckel erhalten wird, was insofern wichtig ist, als der Deckelknopf in erster Linie für Glasdeckel bestimmt ist, bei denen die Öffnungen für das Befestigungselement durch Ausbrennen hergestellt werden. Hierbei sind Toleranzabweichungen und Aufwülstungen nicht zu vermeiden. Diese Toleranzen werden in einfacher und sicherer Art und Weise durch die Flanschhülse ausgeglichen.

Weitere vorteilhafte Ausgestaltungen der Erfindung gehen aus den Unteransprüchen in Verbindung mit Zeichnung und Beschreibung hervor.

Ein Ausführungsbeispiel der Erfindung ist im folgenden anhand der Zeichnung näher beschrieben, in dieser zeigen:

Fig. 1 einen Querschnitt durch einen erfindungsgemäss ausgebildeten Deckelknopf,

Fig. 2 einen Querschnitt gemäss Fig. 1, jedoch mit relativ zum Deckelknopf gedrehter Rosette,

Fig. 3 eine Seitenansicht des in Fig. 1 und 2 gezeigten Deckelknopfes,

Fig. 4 einen Schnitt nach Linie IV-IV in Fig. 2,

Fig. 5 eine Ansicht des Sperrorgans von unten,

Fig. 6 eine Seitenansicht des Sperrorgans,

Fig. 7 einen Querschnitt durch eine weitere Ausführungsform eines erfindungsgemässen Deckelknopfes und

Fig. 8 eine Draufsicht auf die zur Befestigung dienende Flanschhülse.

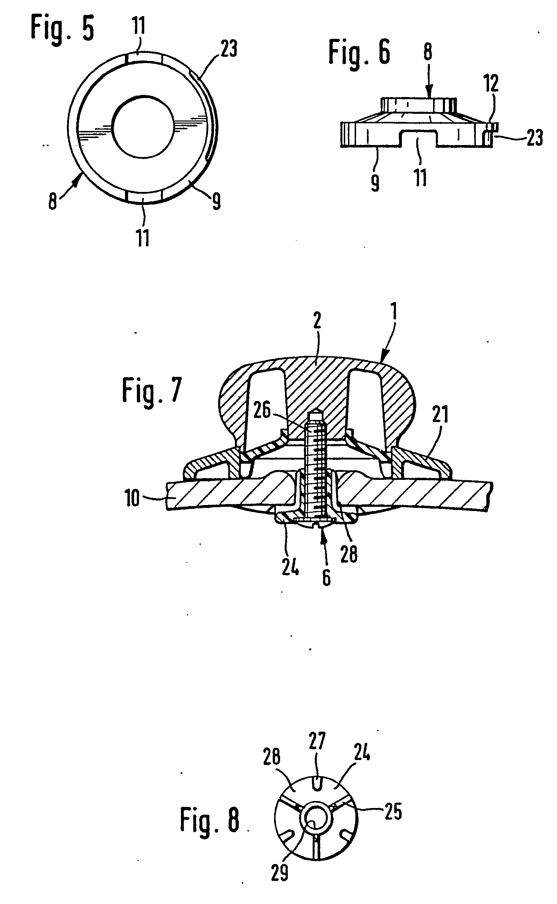

Der Deckelknopf 1 besteht aus einem Griffteil 2, das mit Aussparungen 3 zur Materialersparnis versehen ist. Im Mittelsteg 4 des Griffteils 2 ist eine Gewindebohrung 5 angeordnet, in die eine Schraube 6 eingeschraubt ist. Der Griffteil 2 hat eine umlaufende Auflagefläche 7, mit der der Griffteil 2 auf einem Sperrorgan 8 aufliegt. Das Sperrorgan 8 ist in Fig. 6 in Seitenansicht gezeigt. Dieses Sperrorgan 8 besteht aus einem napfförmigen Formkörper, der mit seinem unteren umlaufenden Rand 9 auf dem Geschirr 10 zur Auflage kommt. Im unteren Rand 9 sind Dampfaustrittsöffnungen 11 angeordnet, die z.B. paarweise auf gegenüberliegenden Seiten des Sperrorgans 8 liegen können. Oberhalb des Randes 9 ist eine Abstütz- und Dichtfläche 12 am Sperrorgan 8 ausgebildet, auf der der Griffteil 2 zur Auflage kommt. Mittels der Schraube 6, die mit einem Bund 13 versehen ist, der an der Unterseite des Geschirres 10 anliegt, wird der Griffteil 2 gegen das Sperrorgan 8 gedrückt und dieses wiederum gegen das Geschirr 10, so dass Griffteil 2 und Sperrorgan 8 drehfest auf dem Geschirr 10 gehalten sind.

Die Schraube 6 weist eine zentrale Bohrung 14 auf, die in Verbindung mit seitlichen Öffnungen 15 steht, durch die der Dampf aus dem Inneren des Geschirres 10 in den zwischen dem Sperrorgan 8 und dem Geschirr 10 gebildeten Raum 16 eintreten kann. Aus diesem Raum 16 kann der Dampf über die Dampfaustrittsöffnungen 11 austreten.

Das Griffteil 2 sowie das Sperrorgan 8 wird von einer Rosette 17 umgeben, die eine innere Bohrung 18 aufweist, deren Grösse so bemessen ist, dass diese dicht am Sperrorgan 8 anliegt. Des weiteren hat die Rosette 17 einen Vorsprung 19, der unter den Griffteil 2 greift, so dass die Rosette in lotrechter Richtung zum Geschirr 10 fixiert ist. Diese Rosette 17 ist frei zum Griffteil 2 sowie zum Sperrorgan 8 drehbar und weist an einer oder zwei gegenüberliegenden Seiten, je nach Anzahl der Dampfdurchtrittsöffnungen 11, Öffnungen 20 auf. Wird die Rosette 17 so verdreht, dass die Öffnung 20 in der Rosette der Dampfaustrittsöffnung 11 gegenüberliegt, so kann der Dampf aus dem Geschirr 10 über den Raum 16, die Dampfaustrittsöffnung 11 im Sperrorgan 8 und die Öffnung 20 aus der Rosette 17 austreten.

Die Rosette 17 weist einen oder mehrere Ansätze 21 auf, die als Griff dienen und mittels derer ein leichtes Verdrehen der Rosette relativ zum Griffteil 2 und zum Sperrorgan 8 gegeben ist.

Der aus dem Geschirr 10 austretende Dampf tritt in den Raum 16 ein, der zwischen dem Geschirr und dem Sperrorgan 8 liegt. Da das Sperrorgan ein vom Griffteil 2 unabhängiges Teil ist, kann dieses aus einem Kunststoff hergestellt werden, der vom heissen Wasserdampf nicht angegriffen wird. Der Dampf tritt bei sich deckenden Öffnungen 11 und 20 parallel zum Geschirr 10 aus dem Griff aus, so dass der Griffteil 2 auch bei Dampfaustritt angefasst werden kann. Dieser Griffteil bleibt kühl, da dieser mit dem Dampf nicht in Berührung kommt.

Die Rosette 17 ist des weiteren mit einem Ansatz 22 versehen, der in eine ringförmige Ausnehmung 23 des Sperrorgans 8 eingreift. Diese Ausnehmung ist in ihrer Länge derart bestimmt, dass hierdurch die Verschiebbarkeit der Rosette relativ zum Griffteil festgelegt wird, und zwar derart, dass die beiden Endstellungen die geschlossene bzw. geöffnete Stellung für den Dampfaustritt bestimmen.

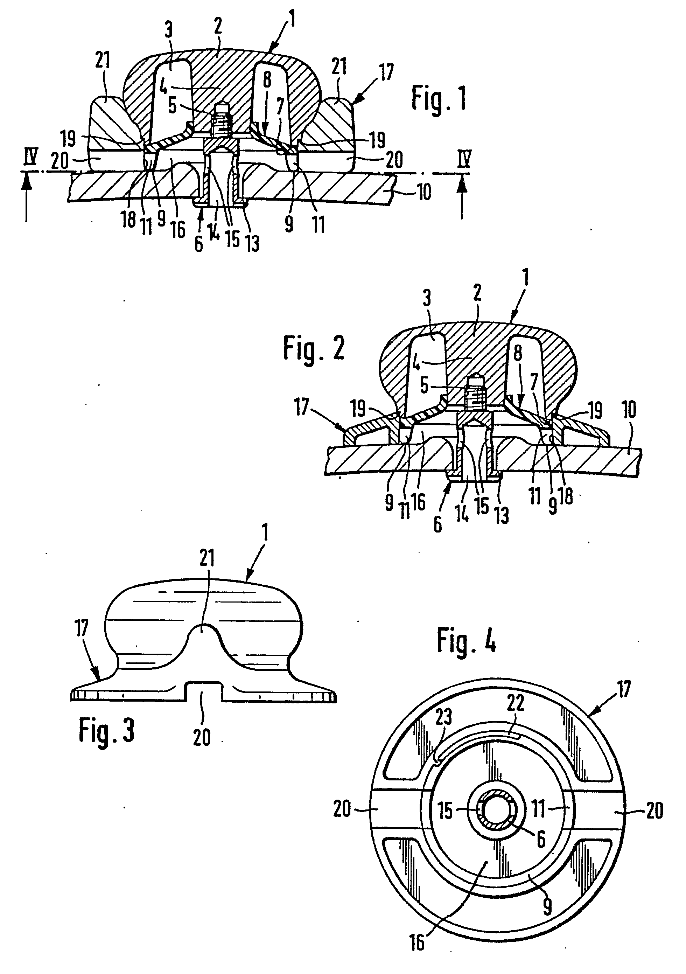

Bei dem in den Fig. 7 und 8 gezeigten Ausführungsbeispiel sind gleiche Teile mit gleichen Bezugszeichen versehen. Dieses Ausführungsbeispiel unterscheidet sich von dem nach den Fig. 1 bis 7 dadurch, dass das Befestigungselement 6 aus einer Schraube 26 und einer Flanschhülse 24 besteht, wobei der Schraubenkopf auf dem Flansch der Flanschhülse zu liegen kommt. Die Schraube 26 ist wiederum im Griffteil 2 eingeschraubt. Die Flanschhülse 24 hat neben einer zentralen Bohrung 29 drei Stege 25, die sich von oben nach unten hin verjüngen und zur Zentrierung der Flanschhülse im Geschirr 10 dienen. Zur Versteifung der Flanschhülse weist diese weiterhin drei Noppen 27 auf, die sich an der Unterseite des Geschirrs anlegen und gewährleisten, dass ein ungehinderter Luftdurchtritt von der Unterseite zur Oberseite des Deckels hin gewährleistet ist.

Der Vorteil dieser Befestigungsart besteht in der handelsüblichen Schraube sowie in der verwendeten Flanschhülse, die es gestattet, Durchmessertoleranzen in der im Geschirr 10 angeordneten Bohrung auszugleichen und somit eine rationelle Fertigung und einen sicheren Sitz des Griffes 1 zu gewährleisten. Die Flanschhülse kann vorteilhaft aus einem widerstandsfähigen, thermoplastischen Kunststoff hergestellt sein.

## Patentansprüche

1. Deckelknopf (1) für Geschirre (10), bestehend aus einem Griffteil (2), der mittels eines Befestigungselementes (6, 24, 26) mit einem Sperrorgan (8) verbunden ist, das den Dampfdurchtritt durch den Deckelknopf steuert und aus einer zwischen Griffteil und Geschirr liegenden Rosette (17), dadurch gekennzeichnet, dass im Griffteil (2) eine Aufnahme (5) für das Befestigungselement (6) ausgebildet ist, dass das Sperrorgan (8) mit einer Dicht- und Auflagefläche (12) versehen ist, auf der das Griffteil (2) ruht, dass das Griffteil (2) und das Sperrorgan (8) zueinander drehfest angeordnet sind, dass das Sperrorgan (8) mit einem oder mehreren radial liegenden Kanälen (16) versehen ist, die über Öffnungen (14, 24) des Befestigungselementes (6, 24, 26) in Verbindung stehen, dass das Sperrorgan (8) in einer dieses eng umschliessenden Ausnehmung der Rosette (17) angeordnet ist, die auf ihrem Umfang mit die Kanäle (16) freigebenden wie verschliessenden Elementen versehen ist und dass die Rosette (17) frei zum Griffteil (2) und zum Sperrorgan (8) drehbar ist.

2. Deckelknopf nach Anspruch 1, dadurch gekennzeichnet, dass das Befestigungselement (6) aus einer mit einer zentralen Bohrung (14) versehenen Schraube besteht, die in eine im Griffteil ausgebildete Gewindebohrung (5) eingreift und dass die Schraube mit seitlich liegenden Öffnungen (15) versehen ist, die die zentrale Bohrung (14) mit den Kanälen (16) verbinden.

3. Deckelknopf nach Anspruch 1, dadurch gekennzeichnet, dass das Befestigungselement (24, 26) aus einer in den Griffteil (2) eingreifenden Schraube (26) und einer Flanschhülse (24) besteht, die die Verbindungskanäle (28) aufweist.

4. Deckelknopf nach Anspruch 3, dadurch gekennzeichnet, dass die Flanschhülse (24) auf der Aussenseite sich nach oben verjüngende Stege (25) aufweist.

5. Deckelknopf nach Anspruch 3 oder 4, dadurch gekennzeichnet, dass die Flanschhülse (24) auf der Flanschinnenseite Noppen (27) aufweist.

6. Deckelknopf nach einem der Ansprüche 1 bis 5, dadurch gekennzeichnet, dass das Sperrorgan topfförmig ausgebildet ist und Damfdurchtrittsöffnungen (11) in den Seitenwänden (9) aufweist.

7. Deckelknopf nach einem der Ansprüche 1 bis 6, dadurch gekennzeichnet, dass die Rosette (17) mit einem Nocken versehen ist, der in eine kreisförmige Ausnehmung im Griffteil (2) eingreift.

8. Deckelknopf nach einem der Ansprüche 1 bis 7, dadurch gekennzeichnet, dass die Rosette (17) mit Griffnocken (20) versehen ist.

9. Deckelknopf nach einem der Ansprüche 1 bis 8, dadurch gekennzeichnet, dass das Sperrorgan (8) und die Rosette (17) aus einem wärme- und dampfbeständigen Material bestehen.

## Claims

1. Lid knob (1) for pots and pans (10), comprising a grip (2), which is connected by means of a fastening element (6, 24, 26) to a sealing member (8), which controls the flow of steam through the lid knob, and a collar (17) disposed between the grip and the pan, characterised in that an accomodating recess (5) is formed in the grip (2) for the fastening element (6), the sealing member (8) is provided with a sealing and bearing surface (12), on which the grip (2) rests, the grip and the sealing member (8) are arranged rotationally rigid relative to each other, the sealing member (8) is provided with one or more radial channels (16), which are connected via openings (14, 24) in the fastening element (6, 24, 26), the sealing member (8) is arranged in a cut-away portion of the collar (17) which closely surrounds the said sealing member, and the collar is provided on its circumference with the channels (16) of releasing and sealing elements, and can be freely rotated relative to the grip (2) and the sealing member (8).

2. Lid knob according to claim 1, characterised in that the fastening element (6) comprises a screw, which is provided with a central bore (14), and which engages in a threaded bore (5) formed in the grip, and the screw is provided with laterally arranged openings (15), which connect the central bore with the channels (16).

3. Lid knob according to claim 1, characterised in that the fastening member (24, 26) comprises a screw (26), which engages in the grip (2), and a flange casing (24), which comprises the connection channels (28).

4. Lid knob according to claim 3, characterised in that the flange casing (24) comprises webs (25) on the outside, which become narrower towards the top.

5. Lid knob according to claim 3 or 4, characterised in that the flange casing (24) comprises knubs (27) on the inside of the flange.

6. Lid knob according to any one of claims 1 to 5, characterised in that the sealing member is cup-shaped and comprises openings (11) in the side walls (9) for the passage of the steam.

7. Lid knob according to any one of claims 1 to 6, characterised in that the collar (17) is provided with a cam, which engages in an annular cut-away portion in the grip (2).

8. Lid knob according to any one of claims 1 to 7, characterised in that the collar (17) is provided with locking cams (20).

9. Lid knob according to any one of claims 1 to 8, characterised in that the sealing member (8) and the collar (17) are made from a heat- and steam resistant material.

## Revendications

1. Bouton de couvercle (1) pour ustensiles de cuisine (10) constitué d'une pièce de préhension (2) qui est jointe par un élément de fixation (6, 24, 26) à un organe d'arrêt (8) qui commande le passage de vapeur dans le bouton de couvercle, et d'une rosette (17) placé entre cette pièce de préhension et l'ustensile de cuisine, caractérisé en ce que la pièce de préhension (2) comporte un logement (5) pour l'élément de fixation (6), en ce que l'organe d'arrêt (8) est pourvu d'une surface de joint et d'appui (12) sur laquelle repose la pièce de préhension (2), en ce que la pièce de préhension (2) et l'organe d'arrêt (8) sont disposés de façon à ne pas pouvoir tourner l'un par rapport à l'autre, en ce que l'organe d'arrêt (8) est pourvu d'un ou de plusieurs canaux radiaux (16) qui communiquent par des ouvertures (14, 28) de l'élément de fixation (6, 24, 26), en ce que l'organe d'arrêt (8) est placé dans un évidement de la rosette (17), qui l'entoure étroitement, cette rosette étant pourvue à sa périphérie d'éléments dégageant et obturant les canaux (16), et en ce que la rosette (17) peut tourner librement par rapport à la pièce de préhension (2) et à l'organe d'arrêt (8).

2. Bouton de couvercle selon la revendication 1, caractérisé en ce que l'élément de fixation (6) est une vis pourvue d'un trou central (14), qui est engagée dans un trou taraudé (5) fait dans la pièce de préhension, et en ce que cette vis est pourvue d'ouvertures latérales (15) qui relient le trou central (14) aux canaux (16).

3. Bouton de couvercle selon la revendication 1, caractérisé en ce que l'élément de fixation (24, 26) est constitué d'une vis (26) engagé dans la pièce de préhension (2) et d'une douille à collet (24) qui présente les canaux de liaison (28).

4. Bouton de couvercle selon la revendication 3, caractérisé en ce que la douille à collet (24) présente sur le côté extérieur des nervures (25) qui se rétrécissent de bas en haut.

5. Bouton de couvercle selon l'une des revendications 3 et 4, caractérisé en ce que la douille à collet (24) présente des boutons (27) sur le côté intérieur de son collet.

6. Bouton de couvercle selon l'une des revendications 1 à 5, caractérisé en ce que l'organe d'arrêt est en forme de pot et présente dans sa paroi latérale (9) des ouvertures de passage de vapeur (11).

7. Bouton de couvercle selon l'une des revendications 1 à 6, caractérisé en ce que la rosette (17) est pourvue d'une saillie qui s'engage dans un évidement circulaire de la pièce de préhension (2).

8. Bouton de couvercle selon l'une des revendications 1 à 7, caractérisé en ce que la rosette (17) est pourvue d'appendices de manoeuvre (21).

9. Bouton de couvercle selon l'une des revendications 1 à 8, caractérisé en ce que l'organe d'arrêt (8) et la rosette (17) sont en matière résistant à la chaleur et à la vapeur.

Fig. 1

Fig. 2

Fig. 3

Fig. 4

Fig. 5

Fig. 6

Fig. 7

Fig. 8